# EUROPEAN PATENT APPLICATION

(11) **EP 2 728 463 A2**
(43) Date of publication of application: **07.05.2014**
(21) Application number: 13174621.6
(22) Date of filing: 02.07.2013
(51) Int. Cl.: G06F 7/58

(54) **Random number generation apparatus and method using input time information**

(30) Priority: 02.11.2012 KR 20120123685
(71) Applicant: Electronics and Telecommunications Research Institute, Daejeon-city 305-350 (KR)
(72) Inventor: Nam, Taek-Jun, 300-070 Daejeon (KR); Yi, Sang-Yi, 305-340 Daejeon (KR); Ahn, Byeong-Ho, 302-120 Daejeon (KR)
(74) Representative: Betten & Resch

(57) **Abstract**

Disclosed herein is a random number generation apparatus and method using input time information. The random number generation apparatus using input time information according to the present invention includes an information obtainment unit for obtaining input time information from input means. An initial value calculation unit calculates an initial value for random number generation using the input time information. A random number generation unit generates a random number using the initial value for random number generation.

## Description

### BACKGROUND OF THE INVENTION

### 1. Technical Field

The present invention relates generally to a random number generation apparatus and method using input time information and, more particularly, to technology for calculating an initial value for random number generation based on the input time information of a user and generating a random number according to the input value.

### 2. Description of the Related Art

In the generation of a random number, when a random number generation algorithm is specified, the complexity of a random number is completely determined according to an initial value for random number generation. In order to increase the complexity of a random number, it is important to calculate an initial value (or seed) for random number generation so that the initial value has a sufficient length using an analog variation value whenever a random number is generated.

Generally, there is a problem in that it is difficult to extract an analog variation value using a digital device without requiring a separate device to generate a random number and calculate an initial value for random number generation that has a sufficient length.

Korean Unexamined Patent Publication No. 2009-7001245 discloses technology for utilizing the process identification (ID) of a function, the time of a system, the status of a system stack, etc. as factors required to calculate an initial value for random number generation so as to generate a random number.

However, the process ID, the time of the system, the status of the system stack, etc. based on the conventional technology are system variables, are limited, and have a predetermined amount of variation, thus enabling generated random numbers to be easily predicted. Further, the conventional technology does not describe technology for utilizing the input interval, input start time, input end time, and input period of a user as factors required to calculate an initial value for random number generation so as to provide a random number having improved complexity.

Accordingly, new random number generation technology is required which can reduce predictability compared to a case where an initial value for random number generation is calculated using predictable factors such as system variables, by utilizing the input interval, input start time, input end time, and input period of a user as factors required to calculate an initial value for random number generation, and which can provide a random number having further improved complexity even to a system to which both a touch pad and a timer are applied as in the case of a smart phone, by including a touch pad and a keypad as an input means.

### SUMMARY OF THE INVENTION

Accordingly, the present invention has been made keeping in mind the above problems occurring in the prior art, and an object of the present invention is to calculate an initial value for random number generation using the input time information of a user, thus reducing predictability and providing random numbers having improved complexity, compared to a case where an initial value for random number generation is calculated using predictable factors, such as system variables.

Another object of the present invention is to utilize the input interval, input start time, input end time, and input period of a user as factors required to calculate an initial value for random number generation, thus reducing association between initial values for random number generation which are generated using the factors, and providing random numbers having further improved complexity upon generating random numbers.

A further object of the present invention is to provide random numbers having further improved complexity even to a system to which both a touch pad and a timer are applied as in the case of a smart phone, by including a touch pad and a keypad as an input means.

In accordance with an aspect of the present invention to accomplish the above objects, there is provided a random number generation apparatus using input time information, including an information obtainment unit for obtaining input time information from input means; an initial value calculation unit for calculating an initial value for random number generation using the input time information; and a random number generation unit for generating a random number using the initial value for random number generation.

Preferably, the input time information may include an input start time indicative of a time at which a user starts inputting; and an input end time indicative of a time at which the user terminates inputting.

Preferably, the input time information may further include an input interval indicative of an absolute value of a difference between a first input end time and a second input start time appearing subsequent to the first input end time; and an input period indicative of an absolute value of a difference between the second input start time and a second input end time appearing subsequent to the second input start time.

Preferably, the information obtainment unit may determine whether the input start time is an initial input start time, and set the input interval to 0 if it is determined that the input start time is the initial input start time.

Preferably, the initial value calculation unit may calculate the initial value for random number generation using one or more of the input interval, the input start time, the input end time, and the input period.

Preferably, the initial value calculation unit may calculate a new initial value for random number generation whenever the user terminates inputting, and update an existing initial value for random number generation to the new initial value for random number generation.

Preferably, the initial value calculation unit may determine whether a request for random number generation has been received from a random number generation algorithm, and provide the initial value for random number generation to the random number generation unit if it is determined that the request for random number generation has been received.

Preferably, the input means may include one or more of a touch pad and a keyboard.

In accordance with another aspect of the present invention to accomplish the above objects, there is provided a random number generation method using input time information, including obtaining input time information from input means; calculating an initial value for random number generation using the input time information; and generating a random number using the initial value for random number generation.

Preferably, the input time information may include an input start time indicative of a time at which a user starts inputting; and an input end time indicative of a time at which the user terminates inputting.

Preferably, the input time information may further include an input interval indicative of an absolute value of a difference between a first input end time and a second input start time appearing subsequent to the first input end time; and an input period indicative of an absolute value of a difference between the second input start time and a second input end time appearing subsequent to the second input start time.

Preferably, obtaining the input time information may be configured to determine whether the input start time is an initial input start time, and set the input interval to 0 if it is determined that the input start time is the initial input start time.

Preferably, calculating the initial value for the random number generation may be configured to calculate the initial value for random number generation using one or more of the input interval, the input start time, the input end time, and the input period.

Preferably, calculating the initial value for random number generation may be configured to calculate a new initial value for random number generation whenever the user terminates inputting, and update an existing initial value for random number generation to the new initial value for random number generation.

Preferably, calculating the initial value for random number generation may be configured to determine whether a request for random number generation has been received from a random number generation algorithm, and proceed to generating the random number if it is determined that the request for random number generation has been received.

Preferably, the input means may include one or more of a touch pad and a keyboard.

### BRIEF DESCRIPTION OF THE DRAWINGS

The above and other objects, features and advantages of the present invention will be more clearly understood from the following detailed description taken in conjunction with the accompanying drawings, in which:

FIG. 1 is a diagram showing an embodiment of a system to which a random number generation apparatus using input time information according to the present invention is applied;

FIG. 2 is a diagram showing an example of obtainment of input time information according to the present invention;

FIG. 3 is an operating flowchart showing a random number generation method using input time information according to an embodiment of the present invention;

FIG. 4 is a block diagram showing a random number generation apparatus using input time information according to an embodiment of the present invention; and

FIG. 5 is an operating flowchart showing a random number generation method using input time information according to another embodiment of the present invention.

### DESCRIPTION OF THE PREFERRED EMBODIMENTS

The present invention will be described in detail below with reference to the accompanying drawings. In the following description, redundant descriptions and detailed descriptions of known functions and elements that may unnecessarily make the gist of the present invention obscure will be omitted. Embodiments of the present invention are provided to fully describe the present invention to those having ordinary knowledge in the art to which the present invention pertains. Accordingly, in the drawings, the shapes and sizes of elements may be exaggerated for the sake of clearer description.

Hereinafter, preferred embodiments of the present invention will be described in detail with reference to the attached drawings.

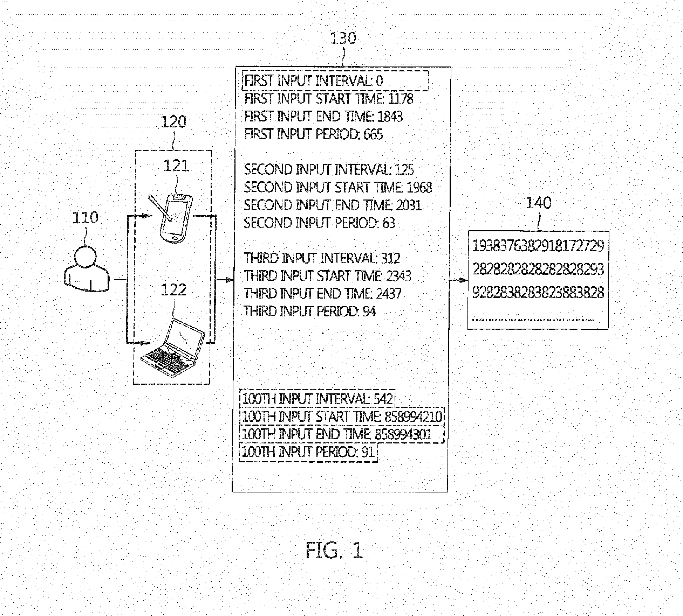

FIG. 1 is a diagram showing an embodiment of a system to which a random number generation apparatus using input time information 130 according to the present invention is applied.

Referring to FIG. 1, the embodiment of the system to which the random number generation apparatus using input time information 130 according to the present invention is applied includes a user 110, an input means 120, input time information 130, and an initial value 140 for random number generation.

The input means 120 includes a touch pad 121 and a keyboard 122.

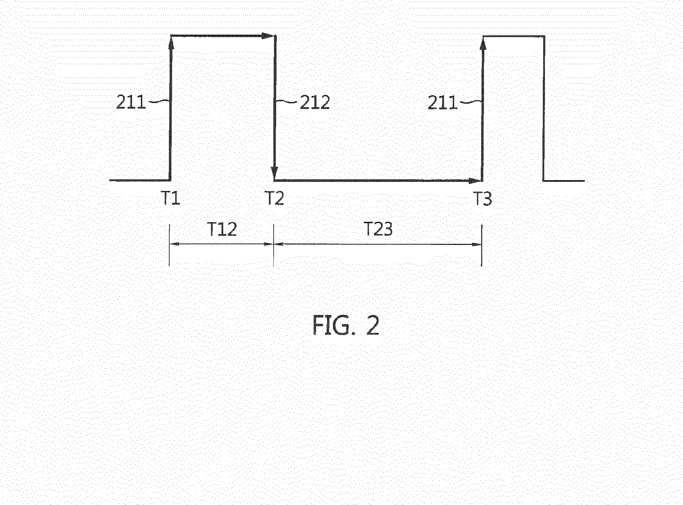

Referring to FIG. 2, an input start signal 211 and an input end signal 212 may be generated by the input means 120.

For example, the input start signal 211 may be a signal based on the start of touching of the touch pad 121.

Further, the input start signal 211 may be a signal based on the start of key pressing of the keyboard 122.

For example, the input end signal 212 may be a signal based on the termination of touching of the touch pad 121.

Further, the input end signal 212 may be a signal based on the termination of key pressing of the keyboard 122.

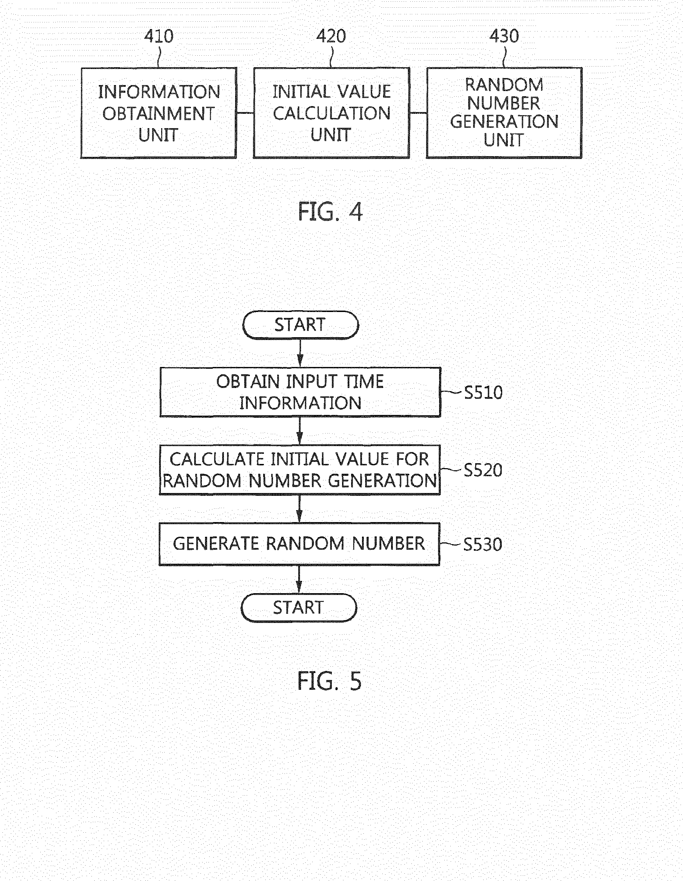

The input time information 130 is obtained by an information obtainment unit 410 (see FIG. 4) according to the present invention.

In this case, the input time information 130 may include an input interval, an input start time, an input end time, and an input period.

The input start time and the input end time may be information obtained by representing times, at which the input start signal 211 and the input end signal 212 are generated based on the start time of an Operating System (OS) as a reference time, by values in milliseconds (ms).

For example, when the input start signal 211 is generated after 1178 ms have elapsed since the reference time, and the input end signal 212 is generated after 1843 ms have elapsed since the reference time, the input start time may be 1178 and the input end time may be 1843.

Here, the input time information 130 may further include an input interval indicative of the absolute value of a difference between a first input end time and a second input start time appearing subsequent to the first input end time, and an input period indicative of the absolute value of a difference between the second input start time and a second input end time appearing subsequent to the second input start time.

The input interval and the input period may be respectively obtained by representing the absolute value of the difference between the first input end time and the second input start time and the absolute value of the difference between the second input start time and the second input end time by values in ms.

For example, the input time information 130 may be configured such that when the first input end time is 1843, the second input start time is 1968, and the second input end time is 2031, the input interval may be 125 and the input period may be 63.

In this case, the information obtainment unit 410 (see FIG. 4) may determine whether the input start time is an initial input start time, and if it is determined that the input start time is the initial input start time, may set the input interval to 0.

For example, the information obtainment unit 410 may be configured such that, when the initial input start signal 211 from the user 110 is generated after 1178 ms have elapsed since the reference time, and the input end signal 212 is generated after 1843 ms have elapsed since the reference time, the input start time 1178 is the initial input start time, and so the input interval can be set to 0.

The initial value 140 for random number generation is calculated by an initial value calculation unit 420 (see FIG. 4) according to the present invention.

In this case, the initial value 140 for random number generation may be calculated using the input time information 130.

Here, the initial value 140 for random number generation may be calculated using one or more of the input interval, the input start time, the input end time, and the input period.

For example, when the input time information 130 includes a total of 400 pieces of information ranging from a first input interval, a first input start time, a first input end time, and a first input period to a 100th input interval, a 100th input start time, a 100th input end time, and a 100th input period, the initial value 140 for random number generation may be calculated using all of them.

The initial value 140 for random number generation may be newly calculated and updated by the initial value calculation unit 420 whenever the user 110 terminates inputting.

In this case, the initial value 140 for random number generation may be provided to a random number generation unit 430 (see FIG. 4) when a request for random number generation is received from the initial value calculation unit 420.

FIG. 2 is a diagram showing an example of obtainment of input time information 130 according to the present invention.

Referring to FIG. 2, the obtainment of the input time information 130 according to the present invention is performed using times at which an input start signal 211 and an input end signal 212 are generated.

The input start signal 211 and the input end signal 212 are generated by the input means 120.

For example, the input start signal 211 may be a signal based on the start of touching of the touch pad 121.

Further, the input start signal 211 may be a signal based on the start of key pressing of the keyboard 122.

For example, the input end signal 212 may be a signal based on the termination of touching of the touch pad 121.

Further, the input end signal 212 may be a signal based on the termination of key pressing of the keyboard 122.

In this case, the information obtainment unit 410 may measure a time T1 at which the input start signal 211 is generated, and then may obtain T1 as the input start time.

The input start time may be information obtained by representing a time, at which the input start signal 211 is generated based on the start time of an Operating System (OS) as a reference time, by a value in ms.

For example, the information obtainment unit 410 is configured to, when the input start signal 211 is generated after 1178 ms have elapsed since the reference time, obtain 1178 as the input start time.

Further, the information obtainment unit 410 may measure a time T2 at which the input end signal 212 is generated and may obtain T2 as the input end time.

The input end time may be information obtained by representing a time, at which the input end signal 212 is generated based on the start time of an OS as the reference time, by a value in ms.

For example, the information obtainment unit 410 is configured to, when the input end signal 212 is generated after 1843 ms have elapsed since the reference time, obtain 1843 as the input end time.

In this case, the information obtainment unit 410 may calculate T12, which is the absolute value of a difference between T2 and T1, and may obtain T12 as the input period.

For example, the information obtainment unit 410 is configured to, when T1 is 1968 and T2 is 2031, obtain 63, which is the absolute value of a difference between 2031 and 1968, as the input period.

In this case, the information obtainment unit 410 may calculate T23, which is the absolute value of a difference between T3 and T2, and may obtain T23 as the input interval.

For example, when T2 is 2031 and T3 is 2343, the information obtainment unit 410 may obtain 312, which is the absolute value of a difference between 2343 and 2031, as the input interval.

In this case, when the time at which the initial input start signal 211 is generated is T1, the information obtainment unit 410 may set the input interval to 0.

For example, when the time at which the initial input start signal 211 is generated is T1, T1 is 1178, T2 is 1843, and T3 is 1968, the first input interval may be 0, the first input start time may be 1178, the first input end time may be 1843, the first input period may be 665, the second input interval may be 125, and the second input start time may be 1968.

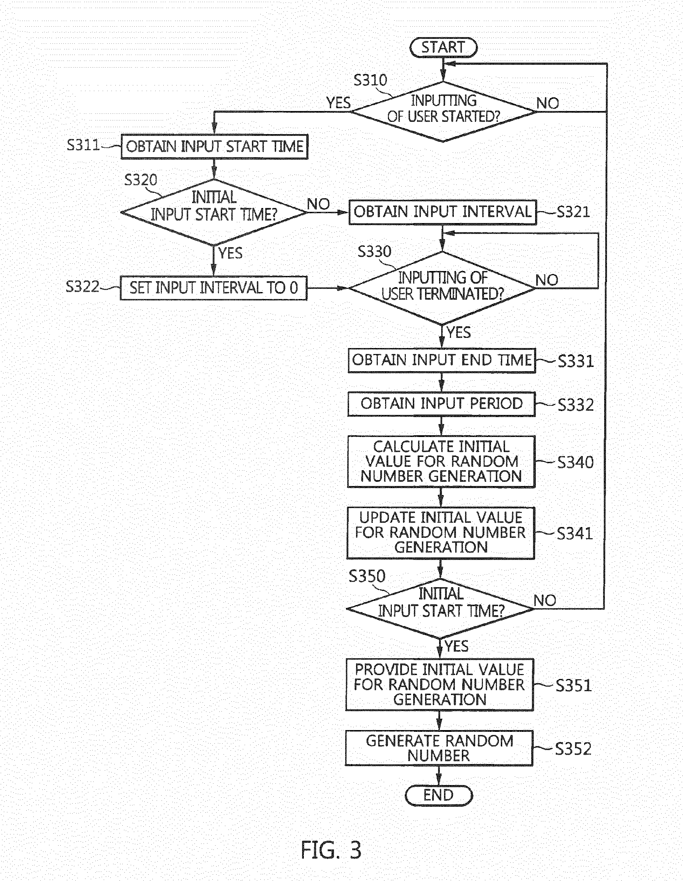

FIG. 3 is an operating flowchart showing a random number generation method using input time information 130 according to an embodiment of the present invention.

Referring to FIG. 3, in the random number generation method using the input time information 130 according to the embodiment of the present invention, it is determined whether the inputting of the user 110 has started at step S310.

Further, in the random number generation method using the input time information 130 according to the embodiment of the present invention, if the inputting of the user 110 has not started, the process of the method returns to step S310.

At step S310, when an input start signal 211 is generated, it can be determined that the inputting of the user 110 has started.

The input start signal 211 may be a signal generated by the input means 120.

For example, the input start signal 211 may be a signal based on the start of touching of the touch pad 121.

Further, the input start signal 211 may be a signal based on the start of key pressing of the keyboard 122.

Next, in the random number generation method using the input time information 130 according to the embodiment of the present invention, if the inputting of the user 110 has started, an input start time is obtained at step S311.

At step S311, a time at which the input start signal 211 is generated may be obtained as the input start time.

Here, the input start time may be information obtained by representing a time, at which the input start signal 211 is generated based on the start time of an OS as a reference time, by a value in ms.

For example, step S311 may be configured to, when the input start signal 211 is generated after 1178 ms have elapsed since the reference time, obtain 1178 as the input start time.

Further, in the random number generation method using the input time information 130 according to the embodiment of the present invention, it is determined whether the input start time is an initial input start time at step S320.

At step S320, if the input start time is obtained in response to the initial input start signal 211, it is determined that the input start time is the initial input start time.

Next, in the random number generation method using the input time information 130 according to the embodiment of the present invention, if it is determined that the input start time is not an initial input start time, an input interval is obtained using a difference between a previously obtained input end time and the input start time at step S321.

In this case, at step S321, the absolute value of a difference between a first input end time and a second input start time appearing subsequent to the first input end time may be calculated and then the input interval may be obtained.

For example, step S321 may be configured to, when the first input end time is 1843 and the second input start time is 1968, obtain 125, which is the absolute value of a difference between 1968 and 1843, as the input interval.

Next, in the random number generation method using the input time information 130 according to the embodiment of the present invention, if the input start time is the initial input start time, the input interval is set to 0 at step S322.

Then, in the random number generation method using the input time information 130 according to the embodiment of the present invention, it is determined whether the inputting of the user 110 has been terminated at step S330.

In this case, in the random number generation method using the input time information 130 according to the embodiment of the present invention, if it is determined that the inputting of the user 110 has not been terminated, the process returns to step S330.

At step S330, if an input end signal 212 is generated, it may be determined that the inputting of the user 110 has been terminated.

The input end signal 212 may be a signal generated by the input means 120.

For example, the input end signal 212 may be a signal based on the termination of touching of the touch pad 121.

Further, the input end signal 212 may be a signal based on the termination of key pressing of the keyboard 122.

Next, in the random number generation method using the input time information 130 according to the embodiment of the present invention, when an input end signal 212 is generated, an input end time is obtained at step S331.

Here, at step S331, a time at which the input end signal 212 is generated may be obtained as the input end time.

In this case, the input end time may be information obtained by representing a time, at which the input end signal 212 is generated based on the start time of an OS as a reference time, by a value in ms.

For example, step S331 may be configured to, when the input end signal 212 is generated after 1843 ms have elapsed since the reference time, obtain 1843 as the input end time.

Next, in the random number generation method using the input time information 130 according to the embodiment of the present invention, an input period is obtained using a difference between the input start time and the input end time at step S332.

In this case, step S332 may be configured to calculate the absolute value of a difference between the second input start time and a second input end time appearing subsequent to the second input start time, and then obtain the input period.

For example, step S332 may be configured to, when the second input start time is 1968 and the second input end time is 2031, obtain 63, which is the absolute value of a difference between 2031 and 1968, as the input period.

Next, in the random number generation method using the input time information 130 according to the embodiment of the present invention, an input value 140 for random number generation is generated using one or more of the input interval, the input start time, the input end time, and the input period at step S340.

For example, at step S340, when the input time information 130 includes a total of 400 pieces of information ranging from a first input interval, a first input start time, a first input end time, and a first input period to a 100th input interval, a 100th input start time, a 100th input end time, and a 100th input period, the initial value 140 for random number generation may be calculated using all of them.

Further, in the random number generation method using the input time information 130 according to the embodiment of the present invention, the initial value 140 for random number generation is updated at step S341.

Here, at step S341, whenever the user 110 terminates inputting, a new initial value 140 for random number generation may be calculated, and an existing initial value 140 for random number generation may be updated to the new initial value 140 for random number generation.

Next, in the random number generation method using the input time information 130 according to the embodiment of the present invention, it is determined whether a request for random number generation has been received at step S350.

In the random number generation method using the input time information 130 according to the embodiment of the present invention, if the request for random number generation has not been received, the process returns to step S350.

Further, in the random number generation method using the input time information 130 according to the embodiment of the present invention, if the request for random number generation has been received, the initial value 140 for random number generation is provided at step S351.

Next, in the random number generation method using the input time information 130 according to the embodiment of the present invention, a random number is generated using the initial value 140 for random number generation at step S352.

FIG. 4 is a block diagram showing the random number generation apparatus using input time information 130 according to an embodiment of the present invention.

Referring to FIG. 4, the random number generation apparatus using the input time information 130 according to the embodiment of the present invention includes an information obtainment unit 410, an initial value calculation unit 420, and a random number generation unit 430.

The information obtainment unit 410 obtains input time information 130 from an input means 120 (see FIG. 1).

In this case, the input time information 130 may include an input start time indicative of a time at which the user 110 starts inputting and an input end time indicative of a time at which the user 110 terminates inputting.

The input start time and the input end time may be information obtained by representing times at which an input start signal 211 and an input end signal 212 are generated, based on the start time of an Operating System (OS) as a reference time, by values in milliseconds (ms).

For example, when the input start signal 211 is generated after 1178 ms have elapsed since the reference time, and the input end signal 212 is generated after 1843 ms have elapsed since the reference time, the input start time may be 1178 and the input end time may be 1843.

Here, the input time information 130 may further include an input interval indicative of the absolute value of a difference between a first input end time and a second input start time appearing subsequent to the first input end time, and an input period indicative of the absolute value of a difference between the second input start time and a second input end time appearing subsequent to the second input start time.

The input interval and the input period may be respectively obtained by representing the absolute value of the difference between the first input end time and the second input start time and the absolute value of the difference between the second input start time and the second input end time by values in ms.

For example, the input time information 130 may be configured such that when the first input end time is 1843, the second input start time is 1968, and the second input end time is 2031, the input interval may be 125 and the input period may be 63.

In this case, the information obtainment unit 410 may determine whether the input start time is an initial input start time, and may set the input interval to 0 if it is determined that the input start time is the initial input start time.

For example, when an initial input start signal 211 from the user 110 is generated after 1178 ms have elapsed since the reference time, the information obtainment unit 410 may determine that the input start time 1178 is the initial input start time, and set the input interval to 0.

In this case, the input means 120 may include one or more of a keyboard 122 and a touch pad 121.

The initial value calculation unit 420 calculates an initial value 140 for random number generation using the input time information 130.

In this case, the initial value calculation unit 420 may calculate the initial value 140 for random number generation using one or more of the input interval, the input start time, the input end time, and the input period.

For example, when the input time information 130 includes a total of 400 pieces of information ranging from a first input interval, a first input start time, a first input end time, and a first input period to a 100th input interval, a 100th input start time, a 100th input end time, and a 100th input period, the initial value calculation unit 420 may calculate the initial value 140 for random number generation using all of them.

In this case, the initial value calculation unit 420 may calculate a new initial value 140 for random number generation whenever the user 110 terminates inputting, and may update an existing initial value 140 for random number generation to a new initial value 140 for random number generation.

The initial value calculation unit 420 may determine whether a request for random number generation has been received from a random number generation algorithm and may provide the initial value 140 for random number generation to the random number generation unit 430 if the request for random number generation has been received.

The random number generation unit 430 generates a random number using the initial value 140 for random number generation.

FIG. 5 is an operating flowchart showing a random number generation method using input time information 130 according to another embodiment of the present invention.

Referring to FIG. 5, in the random number generation method using the input time information 130 according to the embodiment of the present invention, input time information 130 is obtained from the input means 120 at step S510.

In this case, the input time information 130 may include an input start time indicative of a time at which the user 110 starts inputting, and an input end time indicative of a time at which the user 110 terminates inputting.

The input start time and the input end time may be information obtained by representing times, at which an input start signal 211 and an input end signal 212 are generated based on the start time of an OS as a reference time, by values in milliseconds (ms).

For example, when the input start signal 211 is generated after 1178 ms have elapsed since the reference time, and the input end signal 212 is generated after 1843 ms have elapsed since the reference time, the input start time may be 1178 and the input end time may be 1843.

Here, the input time information 130 may further include an input interval indicative of the absolute value of a difference between a first input end time and a second input start time appearing subsequent to the first input end time, and an input period indicative of the absolute value of a difference between the second input start time and a second input end time appearing subsequent to the second input start time.

The input interval and the input period may be respectively obtained by representing the absolute value of the difference between the first input end time and the second input start time and the absolute value of the difference between the second input start time and the second input end time by values in ms.

For example, the input time information 130 may be configured such that when the first input end time is 1843, the second input start time is 1968, and the second input end time is 2031, the input interval may be 125 and the input period may be 63.

In this case, at step S510, it is determined whether the input start time is an initial input start time, and if it is determined that the input start time is the initial input start time, the input interval may be set to 0.

Meanwhile, the input means 120 may include one or more of the keyboard 122 and the touch pad 121.

Next, in the random number generation method using the input time information 130 according to the embodiment of the present invention, an initial value 140 for random number generation is calculated using the input time information 130 at step S520.

At step S520, the initial value 140 for random number generation may be calculated using one or more of the input interval, the input start time, the input end time, and the input period.

For example, when the input time information 130 includes a total of 400 pieces of information ranging from a first input interval, a first input start time, a first input end time, and a first input period to a 100th input interval, a 100th input start time, a 100th input end time, and a 100th input period, the initial value calculation unit 420 may calculate the initial value 140 for random number generation using all of them.

In this case, at step S520, whenever the user 110 terminates inputting, a new initial value 140 for random number generation may be calculated and an existing initial value 140 for random number generation may be updated to the new initial value 140 for random number generation.

Further, at step S520, it is determined whether a request for random number generation has been received from a random number generation algorithm, and if it is determined that the request for random number generation has been received, the process may proceed to step S530.

In the random number generation method using the input time information 130 according to the embodiment of the present invention, a random number is generated using the initial value 140 for random number generation at step S530.

In accordance with the present invention, the present invention can calculate an initial value for random number generation using the input time information of a user, thus reducing predictability and providing random numbers having improved complexity, compared to a case where an initial value for random number generation is calculated using predictable factors, such as system variables.

Further, the present invention can utilize the input interval, input start time, input end time, and input period of a user as factors required to calculate an initial value for random number generation, thus reducing association between initial values for random number generation which are generated using the factors, and providing random numbers having further improved complexity upon generating random numbers.

Furthermore, the present invention can provide random numbers having further improved complexity even to a system to which both a touch pad and a timer are applied as in the case of a smart phone, by including a touch pad and a keypad as an input means.

As described above, in the random number generation apparatus and method using input time information according to the present invention, the configurations and schemes in the above-described embodiments are not limitedly applied, and some or all of the above embodiments can be selectively combined and configured so that various modifications are possible.

## Claims

1. A random number generation apparatus using input time information, comprising:
an information obtainment unit for obtaining input time information from input means;
an initial value calculation unit for calculating an initial value for random number generation using the input time information; and
a random number generation unit for generating a random number using the initial value for random number generation.

2. The random number generation apparatus of claim 1, wherein the input time information includes:
an input start time indicative of a time at which a user starts inputting; and
an input end time indicative of a time at which the user terminates inputting.

3. The random number generation apparatus of claim 1 or 2, wherein the input time information further includes:
an input interval indicative of an absolute value of a difference between a first input end time and a second input start time appearing subsequent to the first input end time; and
an input period indicative of an absolute value of a difference between the second input start time and a second input end time appearing subsequent to the second input start time.

4. The random number generation apparatus of one of claims 1 to 3, wherein the information obtainment unit determines whether the input start time is an initial input start time, and sets the input interval to 0 if it is determined that the input start time is the initial input start time.

5. The random number generation apparatus of one of claims 1 to 4, wherein the initial value calculation unit calculates the initial value for random number generation using one or more of the input interval, the input start time, the input end time, and the input period.

6. The random number generation apparatus of one of claims 1 to 5, wherein the initial value calculation unit calculates a new initial value for random number generation whenever the user terminates inputting, and updates an existing initial value for random number generation to the new initial value for random number generation.

7. The random number generation apparatus of one of claims 1 to 6, wherein the initial value calculation unit determines whether a request for random number generation has been received from a random number generation algorithm, and provides the initial value for random number generation to the random number generation unit if it is determined that the request for random number generation has been received.

8. A random number generation method using input time information, comprising:
obtaining input time information from input means;
calculating an initial value for random number generation using the input time information; and
generating a random number using the initial value for random number generation.

9. The random number generation method of claim 8, wherein the input time information includes:
an input start time indicative of a time at which a user starts inputting; and
an input end time indicative of a time at which the user terminates inputting.

10. The random number generation method of claim 8 or 9, wherein the input time information further includes:
an input interval indicative of an absolute value of a difference between a first input end time and a second input start time appearing subsequent to the first input end time; and
an input period indicative of an absolute value of a difference between the second input start time and a second input end time appearing subsequent to the second input start time.

11. The random number generation method of one of claims 8 to 10, wherein obtaining the input time information is configured to determine whether the input start time is an initial input start time, and set the input interval to 0 if it is determined that the input start time is the initial input start time.

12. The random number generation method of one of claims 8 to 11, wherein calculating the initial value for the random number generation is configured to calculate the initial value for random number generation using one or more of the input interval, the input start time, the input end time, and the input period.

13. The random number generation method of one of claims 8 to 12, wherein calculating the initial value for random number generation is configured to calculate a new initial value for random number generation whenever the user terminates inputting, and update an existing initial value for random number generation to the new initial value for random number generation.

14. The random number generation method of one of claims 8 to 13, wherein calculating the initial value for random number generation is configured to determine whether a request for random number generation has been received from a random number generation algorithm, and proceeding to generating the random number if it is determined that the request for random number generation has been received.

15. The random number generation apparatus of one of claims 1 to 7, or the random number generation method of one of claims 8 to 14, wherein the input means comprises one or more of a touch pad and a keyboard.
